# EUROPEAN PATENT SPECIFICATION

(11) **EP 2 058 410 B1**
(45) Date of publication and mention of the grant of the patent: **18.04.2012**
(21) Application number: 07785491.7
(22) Date of filing: 19.07.2007
(51) Int. Cl.: C22B 1/00, C22B 3/08, C01G 49/14, C22B 23/00

(54) **PROCESS FOR TREATING AQUEOUS LATERITIC-ORE PULPS IN PRESSURIZED ACID TECHNOLOGY**
VERFAHREN ZUR BEHANDLUNG VON WASSERHALTIGEN LATERITERZEN IN DER DRUCKSÄURETECHNIK
PROCÉDÉ DE TRAITEMENT DES PULPES AQUEUSES DE MINÉRAUX LATÉRITIQUES SELON LA TECHNOLOGIE ACIDE SOUS PRESSION

(30) Priority: 07.08.2006 CU 20060155
(43) Date of publication of application: 13.05.2009
(73) Proprietor: CENTRO DE INVESTIGACIONES Y PROYECTOS PARA LA INDUSTRIA MINERO METALURGICA, Habana 10800 (CU)
(72) Inventor: ESTEBAN LUIS ALFONSO OLMO, E, Habana 10400 (CU); JOSÉ CASTELLANOS SUÁRES, J, Habana 10200 (CU); ÁIDA ÁLVAREZ ALONSO, A, Habana 11900 (CU); MARÍA DE FATIMA BUGALLO DAVIS, F, Habana 10500 (CU)
(74) Representative: Carpintero Lopez, Francisco
(86) International application number: PCT/CU2007/000016
(87) International publication number: WO 2008/019633

(56) References cited:
- EP-A1- 0 451 456
- EP-A1- 2 006 399
- GB-A- 2 001 612
- US-A- 3 761 566
- US-B1- 6 391 089

## Description

This invention is related to non ferrous hydrometallurgy and in particular, with the thickening of the aqueous pulps of lateritic minerals through the pressure acid technology.

The volume or productivity of mineral processing in the pressure acid technology is limited to the capacity of the equipment used in the process and by the maximum % solids that can be fed to the autoclaves or leaching reactors.
The processing of diluted or very diluted pulps give the low productivity of the leaching process by decreasing the residence time of the mineral in the autoclave, so it is necessary to diminish productivity to avoid a fall in nickel and cobalt extraction.

Besides, to process a pulp with a high % solids and viscosity, diminishes the transference coeficient of the mass inside the autoclave, lowering the leaching kinetics and the metal extraction. A high viscosity of the pulp lowers its pumping capacity and increases the power consumption.

As can be observed, in the pressure acid technology for the treatment of lateritic minerals-to-extract nickel and cobalt, a key factor is the thickening of the aqueous pulps of raw mineral from the pulp preparation plant, which is carried out in the thickening plant, where the pulps are thickened based on the diluted pulps with initial concentrations of 5-30%, depending on the kind of mineral and of the plant.operation.

The thickened pulp gets a % solids between 45 - 48% solids when coming out of the thickeners, operating at design productivity. It has been demonstrated that an increase in thickeners productivity produces a lowering in the % solids of the thickened pulp (bottom flow).

In the last few years, due to the rheological characteristics of the mineral, the solid concentration has diminished gradually, varying from 45 and 47% solids average for the thickener design productivity.

A significant increase in nickel and cobalt production with the present technique (use of conventional thickeners) is conditioned to increases in solids concentration and thickeners productivity, which requires pumpable slurries. These slurries are pre-heated with vapor and are fed to the autoclaves. An increase in the % solids inside the autoclaves represent an increase in nickel and cobalt production, a diminish in vapor consumption to pre-heat the slurry and a slight reduction in the sulphuric acid consumption.

In general, these conditions (higher % solids and production) represent a diminish in the plant operation costs, which evidence the importance of achieving an increase in the % solids and productivity of the slurries.

It is known from the former technique that the use of the waste liquor (WL) (CU.22884 and publication date 2003) takes advantage of its reductive character because it contains 0.1 - 0.3 g/L H₂S from the gasses coming from the Ni + Co sulphide precipitation autoclaves to increase lateritic pulp thickening.

The raw mineral pulp that will be fed to the thickeners is mixed with the WL at a liquor/volume of thickened pulp ratio of 0.60 to 1.2 and then is fed to the thickeners where even a 3% increase in solids concentration is achieved.
However, this proceeding does not permit to recycle the thickeners overflow to the raw mineral pulp preparation plant, due to its relatively high content of Al, Mg, Mn and acidity, which makes it highly corrosive.

Besides, its implementation is complex because it requires of an expensive facility resistent to the corrosive media (reactors, pumps, etc.) to mix the thickened pulp and the WL (highly corrosive waste liquor), as well as a settler to receive the treated pulp.

Some authors have tried to use iron, aluminium and sodium salts, among others, to improve the lateritic pulps thickening, reporting positive results in some cases and negative in others, without achieving their reproduction at pilot plant and industrial scales. (Falcón, J. Revista Minería y Geología, 2-83 y Valdés, F., Revista Tecnológica 44-50, No 1984).

These salts in general can be produced in a simple way as it is said below.
It is known that some salts can be obtained in a relatively simple way. For example, the production of ferrous sulphate from iron filings or scrap with sulphuric acid (procedure to prepare ferrous sulphate , FR 70.12528, 1971), where the iron filings get in touch with the H₂SO₄ at medium temperature, under controlled conditions, liberating hydrogen because of the ferrous sulphate formation.

Works carried out to obtain heptahydrated ferrous sulphate for animal feeding (Bobes Rodriguez ,L., ¿¿??) have been published. The Research Report is part of the fonds of the Research Center for Mining and Metallurgy, CIPIMM, La Habana, 1982. The process is similar to the former one, carrying out the leaching of the ferric minerals and the reduction of the iron III to iron II.

### Objetives of the invention

The main objective of the invention is to increase the quantity of mineral to be processed and to increase nickel and cobalt production in the facilities existing in the laterite or limonite processing plant, such as the pressure acid leaching plant, for example, Moa's plant or in the projects under construction.

The second objective of this invention is to achieve an increase of the % solids and settlers' productivity, achieving a higher volume of mineral to be processed and a higher nickel and cobalt production with the minimum quantity of equipment.

The third objective is to obtain the used salts to increase the % solids of the lateritic pulps based on the plant's residues.

The fourth objective is to achieve an increase in pulp production with a higher % solids (1 - 5%) that makes the nickel and cobalt recovery more economic.

The essence of the invention consists on the addition of 0.1 - 10 kg of metallic salts/ton of mineral and 0.1 - 10 kg sulphuric acid/ ton of mineral, to the feeding raw mineral pulp, mixed for 0.2 and 10 minutes until the achievement of a final pH in pulp between 2.5 and 6.0 in the thickeners. These results can be achieved through the interaction of metal salts by direct contact with the feeding raw mineral pulp, producing a change in the ionic composition and the rheological properties of the pulp.

What is novel is the addition of metal salts such as ferrous sulphate or mixtures of ferrous sulphate and other metals sulphates as aluminium, in an aqueous acid media to improve the thickening of the raw mineral pulps, with increases of concentrations in the % solids between 1 - 5% and in the settlers productivity between 120 and 180%. Under these conditions, these pulps can be pumped, reporting a 40% lower viscosity.

To have a pulp with high % solids and lower viscosity substantially improves the process of heat and mass transfer, though guaranteeing the disolution kinetics of nickel and cobalt, even with an increase in the autoclaves productivity.
It is also novel the production of additives based on the iron ores and on the tailings from the pressure acid leaching process through the preparation of a pulp with a solids content of 46-65%, to which sulphuric adic is added in a weight ratio of H₂SO₄ / mineral (0.1-1.0), it is stirred and leached for 10 - 60 minutes, achieving a temperature of 90 - 110°C and the diluted leached pulp or the final solution is treated with sulphide, as for example, the tailings from the pressure acid leaching are submitted to leaching with H₂SO₄. The pulp with ferric sulphate and other metals get in touch with sodium or hydrogen sulphide to reduce iron to ferrous.

In the case of using the gas container in the H₂S, it can be done in the following way:

The Fe³⁺ obtained from the tailings leaching with H₂SO₄ are reduced to ferrous ions Fe²⁺ with Na₂S solution obtained from the adsorption of the H₂S contained in the gas emitted by the settlers of the sulphide precipitation plant with caustic soda solution. In the case of the water from the dehumifier, which containes H₂S, the reduction of the ferric ions to ferrous can be done by direct contact of the activated pulp with the aqueous solution which contains the reduction agent.

The sulphide used can be obtained from the residues of the sulphide precipitation plant, as for example, the H₂S or a commercial product.
So, with the addition of 0.2 - 1.0 tons of H_{w}SO₄ per ton of tailings, 0.5 to 1.0 tons of Fe₂(SO₄)₃ per ton of tailing treated with tailings pulp or iron ore with concentrations between 46 and 65% can be obtained.

In the same way, with the interaction of the acid pulp of leached tailings activated with a solution of sodium sulphide prepared at ratios Na₂S /Fe = 0.5 - 2.0 or ratios Fe/H₂S of 3-4, using a contact time per stirring of the phases of 1.0 - 5.0 minutes, the reduction of more than 98.0% of trivalent iron can be achieved.

The acid solution obtained from the before said treatment and that contains the said mixture of salts at ratios FeS0₄ / Al₂(SO₄)₃ 4.0 - 10.0 is usable as coagulant to increase the productivity and concentration of solids in the raw pulp thickening, according to the results obtained from the laboratory thickening tests of raw mineral pulps, with the separate use of these salts and the satisfactory results achieved in the pilot plant tests.

The procedure proposed is based on the use of metal salts such as Fe⁺² and/or Fe⁺² + Al⁺³ in acid solutions, for example, as the ferrous sulphate and the sulphuric acid disolved in water at ratios of 1.5 to 0.5, that mixed with the raw pulp is fed to the thickeners. The salts can be in solid state (commercial salts) that in this case are disolved in water in an acid media or can be directly produced from the acid leaching plant residues.

Advantages of the invention:
1. The reagents used are relatively cheap and easy to adquire.
2. Provokes no negative changes in the environmental control.
3. Does not affect the further leaching and precipitation processes of the Ni + Co sulphides in the main technology.
4. In the same way, the addition of the acid ferrous sulphate solution in concentrations of FeSO₄. 7H₂O and of H₂SO₄ from 0.1 - 10 kg/t of mineral and 0.1 - 10 kg per ton of mineral to be thickened respectively, also permits to increase settlers productivity between 120 - 180% solids concentration between 1-5% and to diminish viscosity in 40-50%.
5. This procedure permits to increase nickel and cobalt production in more than a 10% regarding the present capacity of a plant in operation such as Moa's.
6. Take advantage of the wastes, iron ores, tailings and H₂S emitted as gas or solutions or water containing H₂S to produce solutions with a mixture of ferrous sulphate and aluminium sulphate usable as additive to improve the raw pulp thickening in the thickeners plant of the enterprise.
7. To substantially diminish the costs for there are no salts imports.
8. The practical implementation of the invention is not complex and uses conventional equipment.

### EXAMPLE 1.

Two samples, of 179 litres each of aqueous raw mineral pulp containing 19,78% solids, were submited to the settling process in static system in 2 pilot settlers of 54 cm diameter and 115 cm height, with rakes.

One of the samples was mixed with a sulphuric acid solution and ferrous sulphate in ratios of 3 and 5 kg/t of mineral respectively of these components.
From the results obtained (Table 1) can be observed in the test with additive, an increase in the % solids in the thickened pulps after 24 and 48 hours of more than 6,0 and 3,0% respectively.
The pH values are slightly lower than in the tests with additives, and viscosity diminished in 50Pa.

### Settling tests.

**Table No. 2**

| | Without additive | | With additive | |
|---|---|---|---|---|
| Time | 24 hours | 48 hours | 24 hours | 48 hours |
| Thickened Pulp (% solids) | 41,38 | 46,74 | 47,74 | 49,85 |
| Viscosity (Pascal) | 115 | 120 | 70,6 | 70 |
| pH (water) | 6,15 | 6,24 | 5,8 | 6,08 |

### EXAMPLE 2

Confirmatory settling tests were carried out in two pilot thickeners of same capacity and area (0,2826m²) with aqueous pulps (mineral with 20% solids) and flows of 0.135 L/min, adding in one of them sulphuric acid solution and ferrous sulphate as additives with consumptions of 2 and 6 kg/t of mineral of these reagents respectively, taking the other settler as reference (blank).

After having achieved the stable regime the facility was kept in operation for 5 days, achieving an increase in the % solids in the bottom pulps extracted of 3% average and a productivity of 40% regarding the settler without additives (blank).
The viscosity of the pulps thickened with additives diminished from 120 Pa to 65 Pa.

### EXAMPLE 3

1.81 liters of tailings pulp (d=1.81) were taken and leached with 0.79 L of H₂SO₄ (H₂SO₄/tailings =0.73 for-30 minutes, achieving a maximum temperature of 95.0 C° in 15 minutes. Afterwards, the leached pulp was diluted to 10.0 L with water and stirred for 30.0 minutes. After a 24.0 hour rest, the liquid phase of the settled pulp contained 153 g / L of Fe₂ (SO₄)₃.

### EXAMPLE 4

910 mL of a tailings pulp (d = 1.70) with 55 % solids was prepared based on a sample of the pulp from the bottom of the tank 7 of the washing plant (CCD) which contained 40.29 % solids (d = 1.442), and was leached with 400 mL of H₂SO₄ (98 %).
After 30 minutes leaching at a temperature of 85-95 °C the pulp was diluted with water to a total volume of 3.30 L with a content of solids of 8.7 % d = 1.34.
The liquid phase of the pulp contained g/L: Fe = 79.1; Ni = 0.09; Co = 0.0010; Al = 5.7 Metal extraction was of 60.0 %; 51.00 %; 53.33 % y 62.70 % respectively.

### EXAMPLE 5.

A sample of 0.6 L of sodium sulphide solution which contained 48.0 g/L of Na₂S got in touch, and was stirred for 3 minutes, with 500 mL of the leached pulp prepared in example 2. The liquor of the pulp treated gave a solid that was green-blue color and contained : Fe²⁺ = 30.8 g/L; Fe_{Total} = 32.0 g/L which means 96.0% of ferric iron reduction.

### EXAMPLE 6.

A thickening test was done to an aqueous pulp in a pilot settler of 54cm diameter with mineral from Moa prepared at 20.0% solids, using the additive constituted by a mixture of ferrous sulphate and aluminium sulphate and the acid adjusted to 1.5 Kg of H₂SO4 per ton of mineral. The dose of solution was 685.0 m L obtained from the leaching of a tailings sample that contained: Fe = 35.0 g/L, Al =2.21 g/L, H₂SO₄ = 87.6 g/L.

Table 2 shows the results obtained from the tests with and without additives (blank).

**Table No.2.- Tests with fresh pulp prepared with the mineral.**

| TEST WITHOUT ADDITIVES | | | | | | | | | |
|---|---|---|---|---|---|---|---|---|---|
| Time (h) | Initial pulp V. (L) | Initial pulp P. (Kg) | Initial % solid | Final water V. (L) | Thickened pulp V. (L) | Thickened pulp P. (Kg) | % solids in thickened pulp | | Final pH |
| 24 | 179.64 | 207.62 | 19.37 | 110.40 | 69.24 | 97.22 | 41.36 | | |
| 48 | 179.64 | 207.62 | 19.37 | 121.60 | 58.04 | 86.02 | 46.74 | | 6,24 |
| | | | | | | | | | |
| | | | | | | | | | |

| Treated with FeSO₄ 7 H₂O (3.0 Kg/t + Al₂(SO₄)₃ 11 H₂O (0.42Kg/t) + 1.51 Kg/t de H₂SO₄ | | | | | | | | | |
|---|---|---|---|---|---|---|---|---|---|
| Time (h) | Initial pulp V. (L). | Initial pulp P. (Kg) | Initial % solid | Final water V. (L) | Thickened pulp V. (L) | Thickened pulp P. (Kg) | % solids in thickened pulp | Final pH | Final water V. (L) |
| 24 | 177.72 | 204.9 | 19.78 | 120.00 | 57.72 | 84.90 | 47.74 | | 6.38 |
| 48 | 177.72 | 204.9 | 19.78 | 123.60 | 51.24 | 81.30 | 49.85 | 6,08 | 3.11 |

The presence of additives produced a diminish in viscosity of 60Pa.

### EXAMPLE 7

15.0 mL of the diluted leached pulp from example 4 got in contact, for 1 minute, with 1.0 L of water from the dehumifier of the sulphide plant, which contains 299 ppm of H₂S with a temperature of 87C°. The ratio Fe/ H₂S obtained was 3.95. The oxidation of the H₂S achieved was 98.0%. The pH of the treated solution was 1.6.
The pulp obtained contained: 1.13 g/L Fe²⁺ equivalent to 5.65 g/l FeSO₄ 7H₂O.and 0.3 g / L H₂SO₄ and a 1.80 g/L solids.
Approximately 70% of the solids contained in the pulp were separated, leaving a remanent in the treated water of 0.54 g/L solids composed by not leached tailings and elemental sulphur. To check the coagulation properties of this suspension, settling tests were carried out with aqueous raw pulps (20.1 % Sol.) density equal to 1.15.

200.0 mL of the liquid phase of the raw pulp contained in a test tube of 1.0 L were substituted by 200 m L of the pulp treated with water (0.54 g/L Sól.) equivalent to a dose of 5.0 Kg FeSO₄ 7H₂O per ton of mineral, adjusting the dose of H₂SO₄ to 1.Kg /t of mineral.
The pulps with additive and without additive were mixed and left resting.
After 24 hours, the % solids in the pulp thickened with additive was 2.8 % higher than in the pulp without additive (blank). The final pH of the pulp was 5.3 and contained 0.40 Kg of residual tailings (activated tailings) per ton of mineral.

The practical implementation is simple because the injection of salts requires only of pumps, regulation valves and a small facility to prepare the reagents.

## Claims

1. Procedure to treat aqueous pulps of lateritic minerals in the pressure acid technology, **characterized by** the addition of 0.1-10 kg of metal salts /t of mineral and 0.1-10 kg sulphuric acid /t of mineral, and a salt/acid ratio between 15 and 0.5 for the raw mineral pulp for feeding, mixed for 0.2 and 10 minutes, that produces an increase of the lateritic mineral pulp thickening, that achieves a final pH in pulp between 2.5 and 6.0 in the thickeners, wherein the metallic salt comprises ferrous sulphate (FeSO₄.7H₂O).

2. Procedure to treat aqueous pulps of lateritic minerals in the pressure acid technology according to Claim 1, **characterized by** the fact that the metallic salt is a mixture of ferrous sulphate and commercial aluminium sulphate.

3. Procedure to treat aqueous pulps of lateritic minerals in the pressure acid technology according to Claim 1, **characterized by** the fact that the sulphuric acid is commercial.

4. Procedure to treat aqueous pulps of lateritic minerals in the pressure acid technology according to Claims 1 and 2 **characterized by** the fact that the weight ratio between the ferrous sulphate salts and the aluminium sulphate is 4,0-10.0.

5. Procedure to treat aqueous pulps of lateritic minerals in the pressure acid technology according to Claims 1 and 2 **characterized by** the fact that the metal salts are obtained from the tailings of the pressure acid leaching process.

6. Procedure to treat aqueous pulps of lateritic minerals in the pressure acid technology according to Claim 5 **characterized by** the fact that the tailings are prepared in a pulp with 46-65% solids.

7. Procedure to treat aqueous pulps of lateritic minerals in the pressure acid technology according to Claim 1 **characterized by** the fact that the metal salts are obtained from iron ores.

8. Procedure to treat aqueous pulps of lateritic minerals in the pressure acid technology according to Claim 7 **characterized by** the fact that the iron ores are prepared as pulp with a solids content of 46-65 %.

9. Procedure to treat aqueous pulps of lateritic minerals in the pressure acid technology according to Claims 6 and 8 **characterized by** the fact that the mineral pulp with a solids content of 46-65 % is added sulphuric acid in a weight ratio of H₂SO₄/t of mineral of 0.1 to 1.0, is stirred and leached for 10-60 minutes at a temperature between 90-110° C and the resulting solution is treated with sulphide.

10. Procedure to treat aqueous pulps of lateritic minerals in the pressure acid technology according to Claims 6 and 8 **characterized by** the fact that the pulp is formed by the tailings from the pressure acid leaching process.

11. Procedure to treat aqueous pulps of lateritic minerals in the pressure acid technology according to Claims 7 and 9 **characterized by** the fact that the pulp is formed by iron ores.

12. Procedure to treat aqueous pulps of lateritic minerals in the pressure acid technology according to Claim 9 **characterized by** the fact that the sulphide is commercial sodium sulphide.

13. Procedure to treat aqueous pulps of lateritic minerals in the pressure acid technology according to Claim 9 **characterized by** the fact that the sulphide is a solution of sodium sulphide obtained from the own process.

14. Procedure to treat aqueous pulps of lateritic minerals in the pressure acid technology according to Claim 13 **characterized by** the fact that the sodium sulphide is obtained through the gas absorption from the process and contains H₂S in solutions of sodium hydroxide.

15. Procedure to treat aqueous pulps of lateritic minerals in the pressure acid technology according to Claim 13 **characterized by** the fact that the sodium sulphide is water containing H₂S from the dehumifier or other current of the plant.

16. Procedure to treat aqueous pulps of lateritic minerals in the pressure acid technology according to Claim 13 **characterized by** the fact that the resulting solution treated with sulphide is added to the lateritic pulps with the residual tailings of the leaching, at a dose between 0.1 and 4.0kg of tailings residues /t of lateritic mineral to be thickened.

17. Procedure to treat aqueous pulps of lateritic minerals in the pressure acid technology according to Claim 16 **characterized by** the fact that the tailings leached residues or iron ore are activated tailings.

## Patentansprüche

1. Verfahren zum Behandeln von wässrigen Trüben von Lateritmineralien in der Säuredrucktechnik, **gekennzeichnet durch** die Zugabe von 0,1-10 kg Metallsalzen/t Mineral und 0,1-10 kg Schwefelsäure/t Mineral und ein Salz/Säure-Verhältnis zwischen 15 und 0,5 für die Rohmineraltrübe für die Zuführung, und 0,2 bis 10 Minuten Mischen, was eine Verstärkung der Lateritmineraltrübeverdickung ergibt, was einen End-pH-Wert in der Trübe zwischen 2,5 und 6,0 in den Eindickern ergibt, wobei das Metallsalz Eisen(II)-sulfat (FeSO₄.7H₂O) umfasst.

2. Verfahren zum Behandeln von wässrigen Trüben von Lateritmineralien in der Säuredrucktechnik nach Anspruch 1, **dadurch gekennzeichnet, dass** es sich bei dem Metallsalz um eine Mischung von Eisen(II)-sulfat und handelsüblichem Aluminiumsulfat handelt.

3. Verfahren zum Behandeln von wässrigen Trüben von Lateritmineralien in der Säuredrucktechnik nach Anspruch 1, **dadurch gekennzeichnet, dass** die Schwefelsäure handelsüblich ist.

4. Verfahren zum Behandeln von wässrigen Trüben von Lateritmineralien in der Säuredrucktechnik nach den Ansprüchen 1 und 2, **dadurch gekennzeichnet, dass** das Gewichtsverhältnis zwischen den Eisen-(II)-sulfat-Salzen und dem Aluminiumsulfat 4,0-10,0 beträgt.

5. Verfahren zum Behandeln von wässrigen Trüben von Lateritmineralien in der Säuredrucktechnik nach den Ansprüchen 1 und 2, **dadurch gekennzeichnet, dass** die Metallsalze aus dem Abgang des Druckauslaugungsprozesses erhalten werden.

6. Verfahren zum Behandeln von wässrigen Trüben von Lateritmineralien in der Säuredrucktechnik nach Anspruch 5, **dadurch gekennzeichnet, dass** der Abgang in einer Trübe mit 46-65% Feststoffen hergestellt wird.

7. Verfahren zum Behandeln von wässrigen Trüben von Lateritmineralien in der Säuredrucktechnik nach Anspruch 1, **dadurch gekennzeichnet, dass** die Metallsalze aus Eisenerzen erhalten werden.

8. Verfahren zum Behandeln von wässrigen Trüben von Lateritmineralien in der Säuredrucktechnik nach Anspruch 7, **dadurch gekennzeichnet, dass** die Eisenerze als Trübe mit einem Feststoffgehalt von 46-65% hergestellt werden.

9. Verfahren zum Behandeln von wässrigen Trüben von Lateritmineralien in der Säuredrucktechnik nach den Ansprüchen 6 und 8, **dadurch gekennzeichnet, dass** die Mineraltrübe mit einem Feststoffghehalt von 46-65% mit Schwefelsäure in einem Gewichtsverhältnis H₂SO₄/t Mineral von 0,1 bis 1,0 versetzt, gerührt und 10-60 Minuten bei einer Temperatur zwischen 90-110°C ausgelaugt wird und die erhaltene Lösung mit Sulfid behandelt wird.

10. Verfahren zum Behandeln von wässrigen Trüben von Lateritmineralien in der Säuredrucktechnik nach den Ansprüchen 6 und 8, **dadurch gekennzeichnet, dass** die Trübe aus dem Abgang des Drucksäureauslaugungsprozesses gebildet wird.

11. Verfahren zum Behandeln von wässrigen Trüben von Lateritmineralien in der Säuredrucktechnik nach den Ansprüchen 7 und 9, **dadurch gekennzeichnet, dass** die Trübe aus Eisenerzen gebildet wird.

12. Verfahren zum Behandeln von wässrigen Trüben von Lateritmineralien in der Säuredrucktechnik nach Anspruch 9, **dadurch gekennzeichnet, dass** es sich bei dem Sulfid um handelsübliches Natriumsulfid handelt.

13. Verfahren zum Behandeln von wässrigen Trüben von Lateritmineralien in der Säuredrucktechnik nach Anspruch 9, **dadurch gekennzeichnet, dass** es sich bei dem Sulfid um eine Lösung von Natriumsulfid aus dem eigenen Prozess handelt.

14. Verfahren zum Behandeln von wässrigen Trüben von Lateritmineralien in der Säuredrucktechnik nach Anspruch 13, **dadurch gekennzeichnet, dass** das Natriumsulfid durch Gasabsorption aus dem Prozess erhaltenen wird und H₂S in Lösungen von Natriumhydroxid enthält.

15. Verfahren zum Behandeln von wässrigen Trüben von Lateritmineralien in der Säuredrucktechnik nach Anspruch 13, **dadurch gekennzeichnet, dass** es sich bei dem Natriumsulfid um H₂S enthaltendes Wasser aus dem Entfeuchter oder einen anderen Strom der Anlage handelt.

16. Verfahren zum Behandeln von wässrigen Trüben von Lateritmineralien in der Säuredrucktechnik nach Anspruch 13, **dadurch gekennzeichnet, dass** die resultierende mit Sulfid behandelte Lösung mit den Restabgängen der Auslaugung in einer Dosis zwischen 0,1 und 4,0 kg Abgangsrückstände/t zu verdickendes Lateritmineral zu den Laterittrüben gegeben wird.

17. Verfahren zum Behandeln von wässrigen Trüben von Lateritmineralien in der Säuredrucktechnik nach Anspruch 16, **dadurch gekennzeichnet, dass** es sich bei den Abgangsauslaugungsrückständen oder dem Eisenerz um aktivierten Abgang handelt.

## Revendications

1. Procédé de traitement de pulpes aqueuses de minéraux latéritiques dans la technologie acide sous pression, **caractérisé par** l'addition de 0,1-10 kg de sels métalliques /t de minéral et 0,1-10 kg d'acide sulfurique /t de minéral dans un rapport sel/acide compris entre 15 et 0,5 pour la pulpe de minéraux bruts utilisée comme charge, mélangés pendant 0,2 à 10 minutes, qui produit une augmentation de l'épaississement de la pulpe de minéraux latéritiques, et qui permet d'obtenir un pH final dans la pulpe compris entre 2,5 et 6,0 dans les épaississeurs, dans lequel le sel métallique comprend du sulfate ferreux (FeSO₄.7H₂O).

2. Procédé de traitement de pulpes aqueuses de minéraux latéritiques dans la technologie acide sous pression selon la revendication 1, **caractérisé par le fait que** le sel métallique est un mélange de sulfate ferreux, et de sulfate d'aluminium du commerce.

3. Procédé de traitement de pulpes aqueuses de minéraux latéritiques dans la technologie acide sous pression selon la revendication 1, **caractérisé par le fait que** l'acide sulfurique vient du commerce.

4. Procédé de traitement de pulpes aqueuses de minéraux latéritiques dans la technologie acide sous pression selon les revendications 1 et 2, **caractérisé par le fait que** le rapport pondéral entre les sels de sulfate ferreux et le sulfate d'aluminium est de 4,0-10,0.

5. Procédé de traitement de pulpes aqueuses de minéraux latéritiques dans la technologie acide sous pression selon les revendications 1 et 2, **caractérisé par le fait que** les sels métalliques sont obtenus à partir des queues du procédé de lixiviation acide sous pression.

6. Procédé de traitement de pulpes aqueuses de minéraux latéritiques dans la technologie acide sous pression selon la revendication 5, **caractérisé par le fait que** les queues sont préparées dans une pulpe avec 46-65 % de matières solides.

7. Procédé de traitement de pulpes aqueuses de minéraux latéritiques dans la technologie acide sous pression selon la revendication 1, **caractérisé par le fait que** les sels métalliques sont obtenus à partir de minerais de fer.

8. Procédé de traitement de pulpes aqueuses de minéraux latéritiques dans la technologie acide sous pression selon la revendication 7, **caractérisé par le fait que** les minerais de fer sont préparés sous forme de pulpe avec une teneur en matières solides de 46-65 %.

9. Procédé de traitement de pulpes aqueuses de minéraux latéritiques dans la technologie acide sous pression selon les revendications 6 et 8, **caractérisé par le fait que** la pulpe de minéraux avec une teneur en matières solides de 46-65 % est complétée par de l'acide sulfurique dans un rapport pondéral de H₂SO₄ /t de minéral de 0,1 à 1,0, agitée et lixiviée pendant 10-60 minutes à une température comprise entre 90 et 110 °C, et la solution résultante est traitée avec un sulfure.

10. Procédé de traitement de pulpes aqueuses de minéraux latéritiques dans la technologie acide sous pression selon les revendications 6 et 8, **caractérisé par le fait que** la pulpe est formée par les queues du procédé de lixiviation acide sous pression.

11. Procédé de traitement de pulpes aqueuses de minéraux latéritiques dans la technologie acide sous pression selon les revendications 7 et 9, **caractérisé par le fait que** la pulpe est formée par des minerais de fer.

12. Procédé de traitement de pulpes aqueuses de minéraux latéritiques dans la technologie acide sous pression selon la revendication 9, **caractérisé par le fait que** le sulfure est du sulfure de sodium du commerce.

13. Procédé de traitement de pulpes aqueuses de minéraux latéritiques dans la technologie acide sous pression selon la revendication 9, **caractérisé par le fait que** le sulfure est une solution de sulfure de sodium obtenue à partir du procédé même.

14. Procédé de traitement de pulpes aqueuses de minéraux latéritiques dans la technologie acide sous pression selon la revendication 13, **caractérisé par le fait que** le sulfure de sodium est obtenu par l'absorption de gaz provenant du procédé et contient du H₂S dans des solutions d'hydroxyde de sodium.

15. Procédé de traitement de pulpes aqueuses de minéraux latéritiques dans la technologie acide sous pression selon la revendication 13, **caractérisé par le fait que** le sulfure de sodium est de l'eau contentant du H₂S provenant du déshumidificateur ou d'un autre courant de l'usine.

16. Procédé de traitement de pulpes aqueuses de minéraux latéritiques dans la technologie acide sous pression selon la revendication 13, **caractérisé par le fait que** la solution résultante traitée avec un sulfure est ajoutée aux pulpes latéritiques avec les queues résiduelles de la lixiviation, à une dose comprise entre 0,1 et 4,0 kg de résidus des queues /t de minéral latéritique à épaissir.

17. Procédé de traitement de pulpes aqueuses de minéraux latéritiques dans la technologie acide sous pression selon la revendication 16, **caractérisé par le fait que** les résidus lixiviés des queues ou le minerai de fer sont des queues activées.
